# FASCICULE DE BREVET EUROPEEN

(11) **EP 3 762 251 B1**
(45) Date de publication et mention de la délivrance du brevet: **12.01.2022**
(21) Numéro de dépôt: 20723889.0
(22) Date de dépôt: 12.05.2020
(51) Int. Cl.: B60L 53/67, B60L 53/62, B60L 53/66, B60L 53/60

(54) **SYSTÈME ET PROCÉDÉ DE CHARGE EN ÉNERGIE ÉLECTRIQUE DE VÉHICULES AUTOMOBILES**
SYSTEM UND VERFAHREN ZUM ELEKTRISCHEN AUFLADEN VON KRAFTFAHRZEUGEN
SYSTEM AND METHOD FOR ELECTRICALLY CHARGING MOTOR VEHICLES

(30) Priorité: 14.05.2019 FR 1904994
(43) Date de publication de la demande: 13.01.2021
(73) Titulaire: Chargepoly, 13290 Aix-en-Provence (FR)
(72) Inventeur: MOUSSAVI, Hadi, 13080 Aix-En-Provence (FR)
(74) Mandataire: Fidal Innovation
(86) Numéro de dépôt international: PCT/EP2020/063115
(87) Numéro de publication internationale: WO 2020/229439

(56) Documents cités:
- US-A1- 2011 109 266
- US-A1- 2011 291 616
- US-A1- 2013 057 209
- US-A1- 2019 070 970
- US-B2- 8 324 859

## Description

### DOMAINE DE L'INVENTION

La présente invention se rapporte à des systèmes et à des procédés de charge en énergie électrique de dispositifs électriques, en particulier de véhicules automobiles chargeables en électricité.

### ARRIERE-PLAN TECHNOLOGIQUE

Plus précisément, l'invention se rapporte à un système de charge de véhicules automobiles.

Depuis une centaine d'années, les véhicules automobiles ont essentiellement été propulsés à une énergie provenant de sources fossiles. Depuis des décennies, le mode de distribution de l'énergie aux véhicules automobiles met en œuvre des stations, auxquelles le réservoir de carburant du véhicule est rempli en quelques secondes. Ces stations permettent une certaine flexibilité, en offrant différents types de carburants provenant de sources fossiles. De plus, les véhicules automobiles étant destinés à se déplacer, il en résulte un maillage territorial fin en stations.

Ces dernières années, de plus en plus de véhicules automobiles nécessitent d'être chargés en une source d'énergie complémentaire, ou alternative, comme par exemple de l'électricité dans le cas de véhicules hybrides énergie fossile / électrique, ou tout électrique. L'autonomie d'un véhicule muni d'un réservoir embarqué d'énergie alternative est généralement plus faible. De plus, le temps de charge d'un tel réservoir est plus long que pour l'énergie fossile. De plus, il existe de nombreux nouveaux systèmes énergétiques, de sorte qu'il devient compliqué de disposer de l'ensemble des services en station. De plus, il y a encore peu de véhicules propulsés aux énergies alternatives, ce qui ne justifie pas que chaque station s'équipe en de nombreux systèmes de charge en énergies alternatives. Il en résulte un changement de paradigme dans le système de la charge énergétique de véhicule automobile. Ce changement de paradigme a conduit à déporter le service de charge depuis les stations traditionnelles vers les lieux de stationnement. Aujourd'hui, la charge énergétique est possible en de nombreux emplacements réservés disposés à proximité immédiate d'une source d'énergie. US 2011/291,616 décrit un exemple d'une telle station de charge qui dessert de nombreux emplacements réservés. La station de charge est réalisée modulaire de par le branchement en série ou en parallèle de nombreux modules de charge eux-mêmes constitués de « packs » de charge connectés en série et en parallèle, ce qui permet un découpage fin de la puissance totale disponible à répartir à des véhicules ayant des caractéristiques électriques de charge diverses.

Cette solution n'est toutefois pas optimale car, s'ils ne sont pas assez nombreux, les équipements réservés sont tous occupés, ce qui empêche de charger un véhicule automobile. Et, s'ils sont assez nombreux, ils sont souvent inoccupés, ce qui est problématique vis-à-vis des véhicules traditionnels. Cette solution n'est donc pas assez flexible pour respecter le besoin de mobilité des usagers et l'évolution rapide du nombre de véhicules à source d'énergie alternative.

US 2018/254,643 décrit un système de cadencement de la charge de véhicules électriques. Toutefois, ce système reste gourmand en terme d'infrastructure.

L'invention vise ainsi à améliorer la disponibilité des systèmes de charge en énergie électrique de véhicules automobiles.

### RESUME DE L'INVENTION

Ainsi, l'invention se rapporte à un système de charge en énergie électrique de dispositifs électriques comprenant :
. au moins un premier et un deuxième chargeurs, chaque chargeur étant adapté pour fournir une énergie électrique instantanée de charge d'un dispositif électrique,
. une chaîne électrique reliant les premier et deuxième chargeurs,
. au moins une première, une deuxième et une troisième bornes de charge, chaque borne de charge étant raccordable électriquement à chacun des premier et deuxième chargeurs par l'intermédiaire de la chaîne électrique,
. un système de commutation adapté pour alternativement raccorder ou non chaque borne de charge au premier ou au deuxième chargeur, chaque chargeur ne pouvant être raccordé, au plus, qu'à une unique borne de charge de manière instantanée,
. un système de commande comprenant :
   .. un module informatisé de réception adapté pour recevoir des informations de charge de dispositifs électriques comprenant au moins un identifiant d'une borne de charge à laquelle le dispositif électrique est branché,
   .. un processeur adapté pour déterminer, de manière répétée, à partir d'au moins une rège stockée et accessible au processeur, une cartographie de raccordements entre les bornes de charge et les chargeurs, en fonction au moins des informations de charge reçues et d'au moins une autre information choisie parmi :
      - une information de temps instantanée fournie par une horloge ;
      - une information de temps d'arrivée d'un dispositif électrique à une borne de charge ;
      - une information de temps de départ estimé d'un dispositif électrique de la borne de charge ;
      - une information de durée de présence estimée d'un dispositif électrique à une borne de charge ;
      - une information de niveau de charge initial d'un dispositif électrique ;
      - une information de niveau de charge final souhaité pour un dispositif électrique ;
le système de commande étant adapté pour contrôler de manière répétée le système de commutation pour raccorder électriquement, selon la cartographie de raccordement déterminée, une des bornes de charge au premier chargeur par l'intermédiaire de la chaîne électrique et une autre des bornes de charge au deuxième chargeur par l'intermédiaire de la chaîne électrique.

Grâce à ces dispositions, de nombreux véhicules électriques peuvent être chargés sur un laps de temps donné au moyen d'un nombre inférieur de chargeurs. Les emplacements de stationnement peuvent ne pas être réservés aux seuls véhicules électriques.

Selon différents aspects, il est possible de prévoir l'une et/ou l'autre des dispositions ci-dessous.

Selon une réalisation, le processeur est adapté pour déterminer la cartographie de raccordements à partir en outre d'une information de niveau de charge instantané d'un dispositif électrique.

Selon une réalisation, le système de commutation comprend un dispositif de commutation associé respectivement à chaque borne de charge.

Selon une réalisation, le système de commutation comprend une pluralité de dispositifs de commutation, chaque dispositif de commutation pouvant alternativement :
- connecter électriquement l'emplacement associé au dispositif de commutation avec la chaîne électrique d'un premier côté,
- connecter électriquement l'emplacement associé au dispositif de commutation avec la chaîne électrique d'un deuxième côté,
- laisser passer l'énergie électrique sans connecter l'emplacement associé au dispositif de commutation,
- ouvrir la chaîne électrique.

Selon une réalisation, le système de commutation comprend un dispositif de commutation associé à au moins un chargeur.

Selon une réalisation, le dispositif de commutation associé à une borne de charge et le dispositif de commutation associé à un chargeur présentent le même schéma électrique.

Selon une réalisation, au moins un des chargeurs est mobile, le système de commande étant adapté pour contrôler de manière répétée le système de commutation pour raccorder électriquement une des bornes de charge au premier chargeur par l'intermédiaire de la chaîne électrique et une autre des bornes de charge au deuxième chargeur par l'intermédiaire de la chaîne électrique en fonction de l'emplacement des chargeurs.

Selon une réalisation, le chargeur mobile se raccorde à la chaîne électrique par l'intermédiaire d'une borne de charge.

Selon une réalisation, le chargeur mobile est un véhicule électrique.

Selon un autre aspect, l'invention se rapporte à un procédé de charge en énergie électrique de dispositifs électriques dans lequel, disposant de :
. au moins un premier et un deuxième chargeurs, chaque chargeur étant adapté pour fournir une énergie électrique instantanée de charge d'un dispositif électrique,
. une chaîne électrique reliant les premier et deuxième chargeurs,
. au moins une première, une deuxième et une troisième bornes de charge, chaque borne de charge étant raccordable électriquement à chacun des premier et deuxième chargeurs par l'intermédiaire de la chaîne électrique,
. un système de commutation adapté pour alternativement raccorder ou non chaque borne de charge au premier ou au deuxième chargeur, chaque chargeur ne pouvant être raccordé, au plus, qu'à une unique borne de charge de manière instantanée,

- un module informatisé de réception d'un système de commande reçoit des informations de charge de dispositifs électriques comprenant au moins un identifiant d'une borne de charge (4) à laquelle le dispositif électrique est branché,
- un processeur du système de commande détermine, de manière répétée, à partir d'au moins une rège stockée et accessible au processeur, une cartographie de raccordements entre les bornes de charge et les chargeurs, en fonction au moins des informations de charge reçues, et d'au moins une autre information choisie parmi :
   - une information de temps instantanée fournie par une horloge ;
   - une information de temps d'arrivée d'un dispositif électrique à une borne de charge;
   - une information de temps de départ estimé d'un dispositif électrique de la borne de charge;
   - une information de durée de présence estimée d'un dispositif électrique à une borne de charge ;
   - une information de niveau de charge initial d'un dispositif électrique ;
   - une information de niveau de charge final souhaité pour un dispositif électrique,
- un système de commande contrôle de manière répétée le système de commutation pour raccorder électriquement, selon la cartographie de raccordement déterminée, une des bornes de charge au premier chargeur par l'intermédiaire de la chaîne électrique et une autre des bornes de charge au deuxième chargeur par l'intermédiaire de la chaîne électrique.

Selon un autre aspect, l'invention se rapporte à un programme d'ordinateur comprenant des instructions qui, lorsque le programme est exécuté par un ordinateur, conduisent celui-ci à mettre en oeuvre ce procédé.

### BREVE DESCRIPTION DES DESSINS

Des modes de réalisation de l'invention seront décrits ci-dessous par référence aux dessins, décrits brièvement ci-dessous :
La figure 1 représente schématiquement un système de charge selon un mode de réalisation.
La figure 2 représente schématiquement une borne de charge équipant le système de charge de la figure 1.
La figure 3 représente schématiquement un dispositif de commutation équipant le système de charge de la figure 1.
Les figures 4 à 10 sont des schémas similaires à la figure 1, illustrant chacun un autre mode de réalisation.

Sur les dessins, des références identiques désignent des objets identiques ou similaires.

### DESCRIPTION DETAILLEE

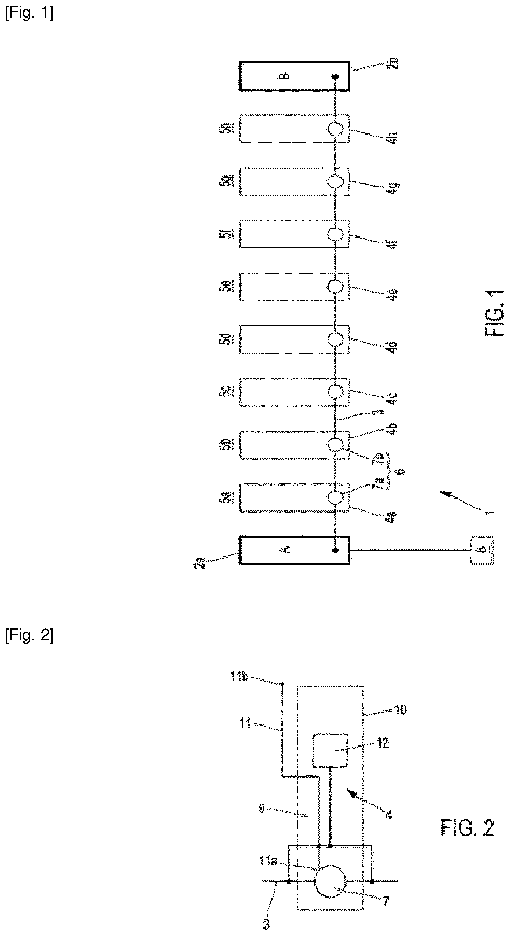

[Fig. 1] représente schématiquement un système de charge 1 selon un mode de réalisation. Le système de charge 1 comprend un premier chargeur 2a et un deuxième chargeur 2b. Ici, les chargeurs peuvent être désignés soit par la référence générale « 2 », soit par individuellement par la référence « 2 » suivie d'une lettre. Chaque chargeur 2 est relié à une source d'énergie, et est capable, en instantané, d'alimenter en énergie électrique, un véhicule électrique, selon un mode de charge particulier. Dans le présent exemple, pour simplifier, chaque chargeur électrique 2 met en oeuvre un unique mode de charge particulier, à savoir, par exemple, une charge dite « rapide » selon les standards publiés et en vigueur à la date de priorité de la présente demande de brevet. Il s'agit par exemple d'une charge en courant continu, de puissance égale ou supérieure à 10 kW, voire 50 kW, voire encore 100 kW. La source d'énergie dont est issue l'énergie fournie par le chargeur 2 est par exemple l'un et/ou l'autre du réseau électrique, d'une source d'énergie renouvelable, d'un stockage d'énergie (batterie, pile à combustible avec stockage d'hydrogène, ...).

Dans cet exemple, les deux chargeurs 2a, 2b, sont distants l'un de l'autre.

Le système de charge 1 comprend une chaîne électrique 3 s'étendant d'un des deux chargeurs à l'autre. La chaîne électrique 3 est apte à transporter l'énergie électrique provenant d'un chargeur.

Le système de charge 1 comprend en outre une pluralité de bornes de charge. Ici, les bornes de charge peuvent être désignées soit par la référence générale « 4 », soit individuellement par la référence « 4 » suivie d'une lettre. Le nombre de bornes de charge 4 est strictement supérieur au nombre de chargeurs 2. Les bornes de charge 4 sont interposées entre les deux chargeurs 2. De plus, dans l'exemple présenté, les bornes de charge 4 sont interposées les unes entre les autres. Plus précisément, une borne de charge 4a, la plus proche du chargeur 2a, est interposée entre le chargeur 2a et une borne de charge 4b. La borne de charge 4b est interposée entre la borne de charge 4a et une borne de charge 4c. Ainsi de suite, jusqu'à la borne de charge 4h interposée entre la borne de charge 4g et le chargeur 2b.

Les bornes de charge 4 sont disposées le long de la chaîne électrique 3. Ainsi, par « interposé entre » deux dispositifs, on entend que la borne de charge est entre les deux autres dispositifs le long de la chaîne électrique 3.

Chaque borne de charge 4 dessert un emplacement de charge de véhicule électrique. Ici, les emplacements de charge peuvent être désignés soit par la référence générale « 5 », soit individuellement par la référence « 5 » suivie d'une lettre. La lettre désignant l'emplacement de charge est la même que la lettre désignant la borne de charge associée à l'emplacement de charge.

Chaque emplacement de charge 5 est apte à recevoir un véhicule électrique susceptible d'être chargé en énergie électrique par le système de charge 1 par l'intermédiaire de la borne de charge 4 associée.

Le système de charge comprend un système de commutation 6. Le système de commutation 6 comprend un ensemble de dispositifs de commutation. Les dispositifs de commutation peuvent être désignés soit par la référence générale « 7 », soit individuellement par la référence « 7 » suivie d'une lettre. Un dispositif de commutation 7 est associé à chaque borne de charge 4. La lettre désignant le dispositif de commutation est la même que la lettre désignant la borne de charge associée au dispositif de commutation.

Chaque dispositif de commutation 7 est électriquement connecté à la borne de charge 4 à laquelle il est associé. Les dispositifs de commutation 7 sont aussi interposés les uns entre les autres le long de la chaîne électrique.

De plus, des dispositifs de commutation 7 sont connectés un à un par une ligne électrique incluse dans la chaîne électrique 3. Plus précisément, dans l'exemple présenté, un dispositif de commutation 7a, associé et connecté à la borne de charge 4a, est aussi connecté au chargeur 2a et au dispositif de commutation adjacent 7b. Le dispositif de commutation 7b, associé et connecté à la borne de charge 4b, est connecté au dispositif de commutation précédent 7a, et aussi au dispositif de commutation adjacent suivant 7c. Dans cet exemple, cette configuration est reproduite jusqu'au dispositif de commutation 7h, associé et connecté à la borne de charge 4g, qui est connecté au dispositif de commutation 7g et au chargeur 2b.

Un dispositif de commutation 7 est adapté pour pouvoir être commuté entre plusieurs configurations. Selon les configurations (pour l'exemple illustratif de la borne de charge 4a) :
- Le dispositif de commutation 7a autorise un raccordement électrique de la borne de charge 4a à laquelle il est associé au chargeur 2a,
- le dispositif de commutation 7a autorise un raccordement électrique de la borne de charge 4a à laquelle il est associé au chargeur 2b,
- le dispositif de commutation 7a ne raccorde la borne de charge 4a à laquelle il est associé à aucun chargeur et laisse passer le courant le long de la chaîne électrique 3,
- le dispositif de commutation 7a ne raccorde la borne de charge 4a à laquelle il est associé à aucun chargeur et ne laisse pas passer le courant.

De plus, le système de commutation 6 est configuré pour que, si une borne de charge 4c est raccordée à un chargeur 2a, les bornes de charge intercalées entre la borne de charge 4c et le chargeur 2a sont toutes raccordées à aucun chargeur et laissent passer le courant. Les références « 4c » et « 2a » sont illustratives seulement.

Il en résulte que, de manière instantanée, un chargeur 2 est raccordé au plus à une unique borne de charge 4. Par « de manière instantanée », on veut ici dire « à un moment donné ». Une borne de charge 4 est raccordée au plus à un unique chargeur 2. Le système de commutation 6 permet ainsi une association un à un entre les chargeurs 2 et les bornes de charge 4. A un instant donné, pour chaque borne de charge 4, soit elle n'est raccordée à aucun chargeur, soit elle est raccordée à un unique chargeur 2. A un instant donné, pour chaque chargeur 2, soit il n'est raccordé à aucune borne de charge 4, soit il est raccordé à une unique borne de charge 4.

Le système de charge 1 comprend également un système de commande 8. Le système de commande 8 est en communication, filaire ou sans fil, avec chacun des dispositifs de commutation 7. Le système de commande 8 est configuré pour commander, de manière répétée, les dispositifs de commutation 7 entre leurs quatre configurations.

Le système de commande 8 est cadencé par une horloge, par exemple selon une cadence prédéterminée. La cadence peut par exemple être paramétrée, et modifiée au cours du temps. Selon un exemple de réalisation, la cadence est d'une opération de vérification d'une nécessité de commutation toutes les 5 minutes. On peut par exemple prévoir une opération de vérification d'une nécessité de commutation selon une fréquence comprise entre une fois toutes les dix secondes et une fois toutes les vingt minutes.

Cette détermination n'est pas nécessairement périodique. Par exemple, on peut prévoir qu'une nouvelle opération de vérification de nécessité de commutation est mise en œuvre en outre à la connexion d'un nouveau véhicule ou à la déconnexion, d'un nouveau véhicule.

Au déclenchement d'une opération de vérification d'une nécessité de commutation, le système de commande 8 vérifie la nécessité d'une commutation. Selon le résultat de cette opération, soit le système de commande 8 ne commande aucune commutation, soit le système de commande 8 commande une ou plusieurs commutations des dispositifs de commutation 7. Etant donné que chaque dispositif de commutation 7 présente quatre configurations, on appelle « commutation » la commutation d'un dispositif de commutation 7 depuis sa configuration actuelle vers une autre configuration. Comme on le verra ci-dessous, cette commande de commutation peut nécessiter la commutation de plusieurs commutateurs individuels.

[Fig. 2] représente schématiquement une borne de charge 4. La borne de charge 4 peut comprendre un support 9 délimité par un boîtier 10, et fixé au sol. Le support 9 reçoit un câble 11 de charge comprenant une première extrémité 11a et une deuxième extrémité 11b opposée. La première extrémité 11a est connectée électriquement au dispositif de commutation 7. La deuxième extrémité 11b comprend une interface de charge adaptée pour être connectée électriquement à une interface de charge complémentaire du véhicule électrique.

Bien que, sur le schéma, le dispositif de commutation 7 soit présenté comme intégré à la borne de charge 4, ce n'est pas nécessairement le cas. Le dispositif de commutation 7 peut être adjacent à la borne de charge, ou branché entre deux bornes de charge adjacentes.

Comme on le comprendra de la description qui suit, la borne de charge 4 peut comprendre divers composants électroniques. Ceux-ci peuvent être alimentés électriquement par une connexion électrique de la borne de charge 4 au secteur. Cette connexion électrique peut, le cas échéant, se faire par l'intermédiaire de la chaîne électrique 3. En particulier, comme représenté sur la figure 2, la chaîne électrique 3 comprend, en amont de la borne de charge 4, un faisceau électrique qui comprend un ou plusieurs fils qui se raccordent électriquement au dispositif de commutation 7, et un ou plusieurs fils qui se raccordent électriquement aux composants électroniques de la borne de charge 4 (matérialisés, dans l'exemple, par l'interface homme-machine 12 présentée ci-dessous) pour l'alimentation électrique de ces composants.

La borne de charge 4 peut également comprendre une interface homme-machine 12 adaptée pour permettre une communication entre le véhicule automobile associé à la borne de charge 4 et le système de charge 1. Plusieurs variantes sont envisageables pour l'interface homme-machine 12. Selon un exemple, on peut prévoir que l'interface homme-machine 12 comprend un moyen pour envoyer des informations vers l'utilisateur et/ou des moyens pour recevoir des informations depuis l'utilisateur. Selon les réalisations, on peut par exemple prévoir un système écran et clavier, ou un écran muni d'une dalle tactile, et/ou un système de communication avec un dispositif informatique portatif de l'utilisateur, et/ou avec un dispositif informatique du véhicule, permettant d'échanger des informations via l'interface homme-machine de l'un et/ou l'autre de ces dispositifs informatiques.

Le système de charge 1 comprend un système de communication adapté pour permettre le transfert d'informations entre les différents composants qui en ont besoin. L'interface homme-machine 12 décrite ci-dessus fait partie de ce système de communication. Le système de communication peut également comprendre un système de communication entre la borne de charge 4 et le système de commande 8. Le système de commande 8 comprend donc un module de réception d'informations. On prévoit par exemple une communication filaire entre la borne de charge 4 et le système de commande 8, pour transmettre des informations entre la borne de charge 4 et le système de commande 8. On peut notamment utiliser la chaîne électrique 3 pour la transmission de ces informations. Celle-ci comprend donc des fils qui permettent le transfert d'informations entre la borne de charge 4 et le système de commande 8, par exemple par l'intermédiaire du chargeur 2a. Les informations en question comprennent par exemple celles saisies, ou une partie de celles saisies via l'interface homme-machine 12 de la borne de charge 4. Les informations en question peuvent également comprendre des informations provenant du véhicule (par exemple de la batterie du véhicule), et transmises par le véhicule à la borne de charge 4. Les informations en question peuvent également comprendre un identifiant de la borne de charge 4 à associer aux informations sus-mentionnées.

En variante, le système de communication peut comprendre un système de communication entre le système de commande 8 et l'utilisateur directement. On peut par exemple prévoir un système non-filaire de communication entre le système de commande 8 et le dispositif informatique portatif de l'utilisateur, et/ou avec un dispositif informatique du véhicule.

Selon un exemple, les informations communiquées au système de commande 8 peuvent comprendre l'une et/ou l'autre des informations suivantes, associées les unes aux autres :
. un identifiant d'un véhicule électrique ;
. un identifiant d'un utilisateur ;
. un identifiant d'une borne de recharge ;
. une information de temps d'arrivée d'un véhicule électrique à une borne de charge ;
. une information de temps de départ estimé d'un véhicule électrique de la borne de charge ;
. une information de durée de présence estimée d'un véhicule électrique à une borne de charge ;
. une information de niveau de charge initial d'un véhicule électrique ;
. une information de niveau de charge final souhaitée pour un véhicule électrique ;
. une information de niveau de charge instantanée d'un véhicule électrique.

De plus, le système de commande 8 dispose d'une information de temps instantanée fournie par une horloge.

Les informations en question sont soit fournies par l'utilisateur, le véhicule, la borne de charge, soit, dans certains cas, estimées par le système de commande 8.

Le système de commande 8 comprend un processeur adapté pour déterminer, de manière répétée, une cartographie de raccordements entre les bornes de charge et les chargeurs, en fonction des informations disponibles. La cartographie de raccordements est déterminée par le processeur afin de répondre de manière optimale à une demande de charge par les véhicules électriques. La manière optimale est déterminée par une ou plusieurs règles stockées et accessibles au processeur. Ces règles sont, le cas échéant, paramètrables.

Pour déterminer la cartographie de raccordement, le processeur peut par exemple prendre en compte la cartographie de raccordement actuelle.

Suite à l'établissement de la cartographie de raccordement, le système de commande 8 peut commander la commutation d'un ou plusieurs dispositifs de commutation 7, pour respecter la cartographie de raccordement déterminée.

Dans certains cas, la cartographie de raccordement déterminée est inchangée par rapport à la cartographie de raccordement précédente et, dans ce cas, le système de commande ne commande aucune commutation.

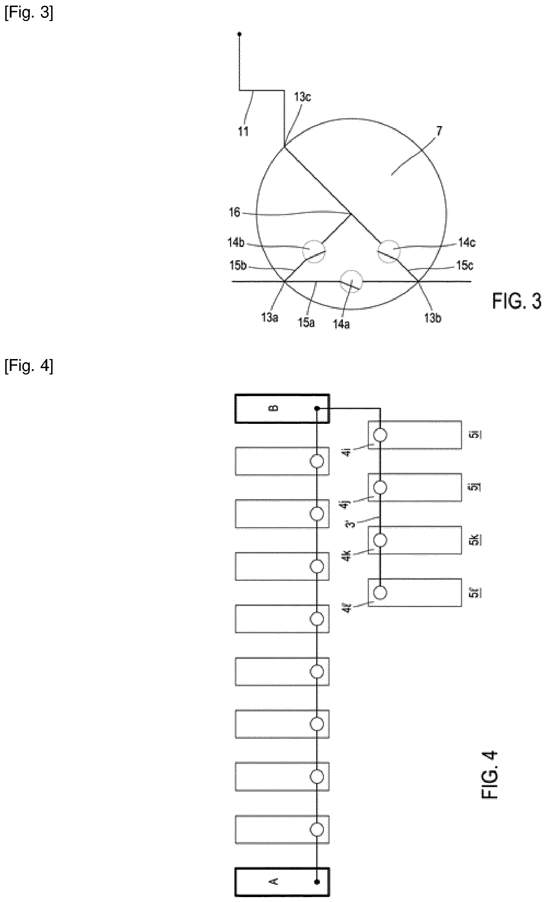

[Fig. 3] représente schématiquement un dispositif de commutation 7 selon un mode de réalisation. Le dispositif de commutation 7 comprend trois interfaces de connexion : Une interface de connexion 13a avec le premier chargeur 2a, une interface de connexion 13b avec le deuxième chargeur 2b, une interface de connexion 13c avec le câble 11.

Le dispositif de commutation 7 comprend des câblages électriques permettant d'établir diverses connexions électriques. Les câblages électriques peuvent être désignés soit par la référence générale « 15 », soit individuellement par la référence « 15 » suivie d'une lettre. Le dispositif de commutation 7 comprend divers commutateurs individuels. Les commutateurs individuels peuvent être désignés soit par la référence générale « 14 », soit individuellement par la référence « 14 » suivie d'une lettre. Différentes variantes de l'agencement présenté sont envisageables pour obtenir les mêmes fonctions de commutation.

Un câblage électrique 15a connecte les interfaces de connexion 13a et 13b. Un commutateur 14a équipe ce câblage électrique. Un câblage électrique 15b connecte l'interface de connexion 13a à l'interface de connexion 13c. Un commutateur 14b équipe ce câblage électrique. Un câblage électrique 15c connecte l'interface de connexion 13b l'interface de connexion 13c. Un commutateur 14c équipe ce câblage électrique. Un système de sécurité est configuré pour qu'un seul des commutateurs 14a, 14b, 14c puisse être fermé à la fois.

Chaque commutateur individuel 14 peut alternativement prendre l'état fermé (le courant passe) ou l'état ouvert (le courant ne passe pas).

Sur le schéma de la figure 3, tous les commutateurs sont à l'état ouvert. Par conséquent, dans cette configuration, le câble 11 n'est pas alimenté.

Les configurations suivantes du dispositif de commutation 7 sont envisageables (« F » représente l'état « fermé », et « O » représente l'état « ouvert ») :

**[Tableaux 1]**

| # | Commutateur 14a | Commutateur 14b | Commutateur 14c | Configuration |
|---|---|---|---|---|
| AA | O | O | O | Ouvert |
| CC | O | F | O | Charge du véhicule par le chargeur 2a (du premier côté) |
| EE | O | O | F | Charge du véhicule par le chargeur 2b (du deuxième côté) |
| FF | F | O | O | Transmission de l'énergie au-delà du dispositif de commutation |

Les configurations de charge par le chargeur 2a nécessitent que l'interface 13a soit connectée électriquement à celui-ci. Ainsi, les dispositifs de commutation 7 intermédiaires entre celui décrit et le chargeur 2a doivent être dans la configuration « FF ».

Les configurations de charge par le chargeur 2b nécessitent que l'interface 13b soit connectée électriquement à celui-ci. Ainsi, les dispositifs de commutation 7 intermédiaires entre celui décrit et le chargeur 2b doivent être dans la configuration « FF ».

Le tableau ci-dessus représente donc schématiquement la charge de deux véhicules aux emplacements de charge 5c et 5g par les chargeurs 2a et 2b.

**[Tableaux 2]**

| | | | | | | | | | |
|---|---|---|---|---|---|---|---|---|---|
| 2a | 7a | 7b | 7c | 7d | 7e | 7f | 7g | 7h | 2b |
| | FF | FF | CC | N/A | N/A | N/A | EE | FF | |

La configuration « CC » du dispositif de commutation 7c et la configuration « EE » du dispositif de commutation 7g isolent électriquement les éléments de circuit disposés entre eux même si la configuration de ces derniers éléments n'est pas la configuration ouverte.

On notera que, si comme décrit ci-dessous, des dispositifs de commutation équipent aussi les chargeurs, le dispositif de commutation du chargeur 2a, dans ce scénario, est en configuration « EE », et le dispositif de commutation du chargeur 2b, dans ce scénario, est en configuration « CC ».

La mise en œuvre d'un mode de réalisation de l'invention va être décrite ci-dessous.

On peut supposer qu'initialement, aucun véhicule électrique n'est branché au système de charge 1. Des véhicules à énergie fossile peuvent être stationnés en divers emplacements mais ne sont pas branchés. Si aucun véhicule n'est branché, le système de commande 8 peut être désactivé. L'ensemble des dispositifs de commutation 7 peuvent être dans leur configuration ouverte « AA ».

Un premier véhicule électrique VE1 stationne en un emplacement. Pour fixer les idées, le véhicule électrique VE1 stationne en l'emplacement 5c. L'utilisateur du véhicule électrique VE1 branche électriquement le véhicule au moyen du câble 11 de la borne 4c.

Le système de commande 8 reçoit les informations suivantes : l'identifiant de la borne de charge 4c depuis celle-ci, une information de temps d'arrivée du véhicule électrique à la borne de charge 4c depuis une horloge, une information du niveau de charge initial du véhicule électrique depuis le processeur du véhicule électrique. Par exemple, ces informations sont transmises par un système de communication sans fil entre chaque borne de charge et le système de commande 8. Le branchement de la borne de charge au véhicule électrique déclenche l'envoi d'informations depuis la borne de charge 4c vers le système de commande 8. L'horloge est par exemple centralisée au niveau du système de commande 8.

Le système de commande 8 peut également recevoir l'une et/ou l'autre des informations suivantes depuis l'utilisateur : une information de temps de départ estimé du véhicule, ou une information de durée estimée de présence de véhicule à la borne de charge, et une information de niveau de charge final souhaitée pour le véhicule électrique associé à la borne de charge.

Comme discuté ci-dessus, ces informations sont fournies par l'utilisateur via l'interface homme-machine de la borne de charge, d'un processeur portatif de l'utilisateur, et/ou d'un processeur du véhicule. Le cas échéant, à défaut de recevoir ces informations, le système de commande peut utiliser des paramètres pré-enregistrés. Selon un exemple, la durée estimée de présence est fixée à une valeur prédéterminée, par exemple deux heures (paramétrée selon l'exploitation du système, par exemple entre une heure et dix heures). Selon un exemple, l'information de niveau de charge final souhaité pour le véhicule électrique peut par exemple être fixé à « plein d'énergie » ou à « sans consigne », auquel cas le système de commande 8 chargera le véhicule au mieux selon les autres contraintes.

A un certain moment, le système de commande 8 établit la cartographie de raccordement.

Etant donné qu'un seul véhicule est à charger, le système de commande 8 établit une cartographie de raccordement par laquelle le véhicule de l'emplacement 5c est chargé par un chargeur disponible, par exemple le chargeur 2a.

Le système de commande 8 contrôle le système de commutation 6 pour raccorder électriquement la borne de charge 4c au premier chargeur 2a par l'intermédiaire de la chaîne électrique 3.

La cartographie est la suivante :

**[Tableaux 3]**

| | | | | | | | | | |
|---|---|---|---|---|---|---|---|---|---|
| 2a | 7a | 7b | 7c | 7d | 7e | 7f | 7g | 7h | 2b |
| | FF | FF | CC | N/A | N/A | N/A | N/A | N/A | |

On notera qu'en alternative, le véhicule pourrait être chargé par le chargeur 2b. La cartographie de raccordement serait alors différente.

En tout état de cause, le véhicule est chargé par un unique chargeur.

Régulièrement, le système de commande 8 établit une cartographie de raccordement. Tant que le véhicule électrique charge, a priori, il n'est pas nécessaire de changer la cartographie de raccordement.

Si le véhicule électrique atteint la consigne de charge, ou si le service de charge est interrompu, le système de commande 8 est interrompu.

Dans certains cas, le véhicule VE1 est en cours de charge quand un deuxième véhicule électrique VE2 demande à accéder au service. La demande d'accès au service pour le véhicule VE2 se fait de la même manière que pour le véhicule VE1, décrite ci-dessus.

Pour fixer les idées, dans un premier exemple de réalisation, le deuxième véhicule électrique VE2 stationne en l'emplacement 5g.

A un certain moment, le système de commande 8 établit la cartographie de raccordement.

Etant donné que seuls deux véhicules sont à charger, le système de commande 8 établit une cartographie de raccordement par laquelle chaque chargeur charge le véhicule le plus proche de lui. Chaque véhicule est chargé par un unique chargeur.

La cartographie est la suivante :

**[Tableaux 4]**

| | | | | | | | | | |
|---|---|---|---|---|---|---|---|---|---|
| 2a | 7a | 7b | 7c | 7d | 7e | 7f | 7g | 7h | 2b |
| | FF | FF | CC | N/A | N/A | N/A | EE | FF | |

Régulièrement, le système de commande 8 établit une cartographie de raccordement. Tant que les véhicules électriques chargent, a priori, la cartographie de raccordement ne va pas changer.

Si un des véhicules électriques atteint sa consigne de charge, on revient dans une configuration où un seul véhicule électrique est à charger, à savoir celui n'ayant pas atteint sa consigne.

Dans ce cas, on se retrouve dans la configuration décrite ci-dessus avec un unique véhicule à charger.

Dans un autre cas, le véhicule impétrant VE2 va stationner en un emplacement intermédiaire entre la borne de charge du véhicule VE1 et le chargeur alimentant celle-ci, par exemple en l'emplacement 5b. Dans ce cas, le système de commande 8 va déconnecter le véhicule électrique VE1 du premier chargeur et le connecter au deuxième chargeur 2b, et connecter le véhicule impétrant VE2 au premier chargeur 2a selon la cartographie suivante :

**[Tableaux 5]**

| | | | | | | | | | |
|---|---|---|---|---|---|---|---|---|---|
| 2a | 7a | 7b | 7c | 7d | 7e | 7f | 7g | 7h | 2b |
| | FF | CC | EE | FF | FF | FF | FF | FF | |

Dans certains cas, un troisième véhicule électrique VE3 va demander l'accès au service de charge.

On se place par exemple dans une configuration de départ telle que présentée au tableau ci-dessus, où des véhicules à charger sont aux emplacements 5b et 5c.

Le système de charge 1 ne peut charger simultanément que deux véhicules.

A un certain moment, le système de commande 8 établit la cartographie de raccordement.

Cette cartographie de raccordement est établie de manière à optimiser la fourniture du service à l'ensemble des demandeurs.

Ce but peut être atteint en déterminant la moins mauvaise configuration instantanée.

Les critères permettant de déterminer la moins mauvaise configuration instantanée sont paramétrés dans le système de commande 8.

Le système de commande 8 détermine donc quels sont les deux véhicules à charger électriquement au cours du prochain intervalle de temps. Cette détermination peut prendre en compte une information de niveau de charge instantanée des véhicules électriques demandant le service. Cette information peut être communiquée soit par le véhicule automobile, soit estimée par le système de commande 8 à partir du niveau de charge initial et du niveau de charge transmise à ce véhicule.

Cette détermination peut être réalisée par exemple par la recherche d'un minimum pour une fonction de coût déterminée ou paramétrée dans le système de commande 8. La fonction de coût vise à faire en sorte d'optimiser la réponse aux contraintes de l'ensemble des véhicules.

Par exemple, si le temps de départ estimé du véhicule VE1 est proche, et que celui-ci est loin d'être chargé à hauteur du niveau de charge au départ souhaité, que le niveau de charge souhaité par le véhicule VE3 est « libre », et que les temps de départ estimés des véhicules VE2 et VE3 sont plus lointains que celui du véhicule VE1, une cartographie de raccordement optimal peut être, pour le prochain intervalle de temps, de charger les véhicules VE1 et VE2, et de ne pas charger le véhicule VE3.

Dans la poursuite de l'exemple précédent, et en supposant que le véhicule VE3 stationne en l'emplacement 5g, la cartographie de raccordement peut être déterminée comme suit :

**[Tableaux 6]**

| | | | | | | | | | |
|---|---|---|---|---|---|---|---|---|---|
| 2a | 7a | 7b | 7c | 7d | 7e | 7f | 7g | 7h | 2b |
| | FF | CC | N/A | N/A | N/A | N/A | EE | FF | |

Pour limiter les cycles de commutation, il est possible de conserver les dispositifs de commutation 7c-7f dans leur configuration précédente. Ceux-ci sont de toute façon isolés électriquement au vu de la configuration des dispositifs de commutation 7b et 7g.

En variante, dans cet exemple, le système de contrôle peut déterminer que les véhicules à charger sont les véhicules VE2 et VE1, respectivement aux emplacements 5b et 5c, et dans ce cas, l'arrivée du véhicule VE3 ne change pas la cartographie de raccordement présentée ci-dessus dans le cas où il n'y a que deux véhicules.

En variante, dans cet exemple, le système de contrôle peut déterminer que les véhicules à charger sont les véhicules VE1 et VE3, respectivement aux emplacements 5c et 5g, et dans ce cas, la cartographie de raccordement peut être déterminée comme suit :

**[Tableaux 7]**

| | | | | | | | | | |
|---|---|---|---|---|---|---|---|---|---|
| 2a | 7a | 7b | 7c | 7d | 7e | 7f | 7g | 7h | 2b |
| | FF | FF | CC | N/A | N/A | N/A | EE | FF | |

Dans tous les cas, pour un nombre de véhicules à charger égal aux nombres de chargeurs, ces véhicules à charger sont chargés, chacun, par un unique chargeur respectif, et les véhicules à charger supplémentaires sont en attente.

Au cas où un des véhicules interrompait le service, la prochaine étape de détermination se ferait avec les véhicules restants. On revient alors à la configuration à deux véhicules présentée ci-dessus.

Dans le cas à trois véhicules en cours de chargement, régulièrement, le système de commande 8 redéfinit la cartographie de chargement en fonction des informations disponibles à cet instant. En effet la vitesse de charge peut diminuer au fur et à mesure que le pourcentage de charge de la batterie du véhicule atteint des niveaux élevés. Il serait alors plus judicieux de redonner la priorité de la charge à un véhicule avec un faible niveau de charge. Par exemple, si deux véhicules en cours de chargement sont proches d'atteindre le niveau de charge requis, il devient de plus en plus pénalisant de ne pas charger du tout le troisième véhicule.

A tout instant, un quatrième véhicule peut demander à accéder au service.

Le fonctionnement, décrit ci-dessus, pour trois véhicules, peut être étendu à quatre véhicules.

Dans l'exemple présenté, le nombre d'emplacements entre les deux chargeurs est de huit. Dans cet exemple, jusqu'à huit véhicules peuvent accéder simultanément au service fourni par deux chargeurs.

Le nombre total d'emplacements desservis par les deux chargeurs dépend de la configuration de l'installation du système.

L'invention présente un intérêt particulier dès que le nombre d'emplacements est strictement supérieur au nombre de chargeurs.

En théorie, il n'y a pas de limite au nombre maximal d'emplacements desservis par les deux chargeurs. Toutefois, pour des raisons pratiques, et pour maximiser les chances de pouvoir fournir un service efficace, le nombre d'emplacements desservis par deux chargeurs peut typiquement être inférieur à 50, voire à 20, voire à 10.

Un nombre élevé d'emplacements est envisageable dans les zones de stationnement où la densité de véhicules électriques est faible, et où les intervalles de temps de charge de véhicules électriques sont très variables selon les véhicules. Ainsi, les véhicules à énergie fossile peuvent stationner sur les emplacements, qui ne sont pas réservés aux véhicules électriques.

Pour les gestions de flottes de véhicules électriques, où la densité de véhicules électriques est importante, et où tous les véhicules électriques sont à charger en même temps, on préférera un nombre réduit d'emplacements par chargeur.

[Fig. 4] représente schématiquement un deuxième mode de réalisation de l'invention.

Ce mode de réalisation diffère du mode de réalisation présenté ci-dessus en ce que des emplacements de charge 5 sont disposés de part et d'autre du chargeur 2b. En particuliers, les emplacements de charge 5i-5l sont associés à des bornes de charge 4i-4l qui sont reliés au chargeur 2b par l'intermédiaire d'une chaîne électrique 3'. Ainsi, dans cette configuration, le chargeur 2b peut alternativement transmettre une énergie électrique de charge aux bornes de charge 4a-4h par l'intermédiaire de la chaîne électrique 3, ou aux bornes de charges 4i-4l par l'intermédiaire de la chaîne électrique 3'. Le chargeur 2a ne peut pas alimenter les bornes de charges 4i-4l.

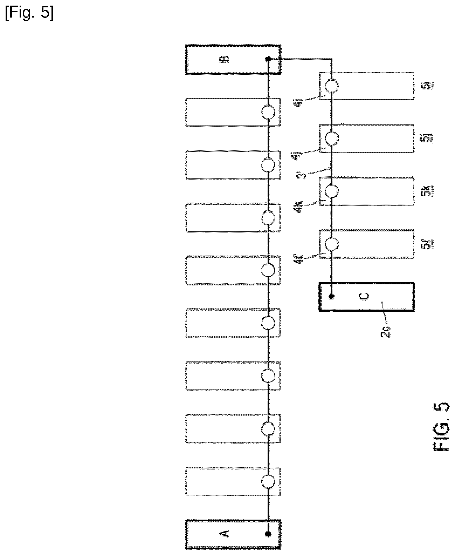

[Fig. 5] représente schématiquement un troisième mode de réalisation de l'invention.

Ce mode de réalisation diffère du mode de réalisation présenté ci-dessus, en ce qu'un troisième chargeur 2c est disposé à l'extrémité de la chaîne 3'. Plus précisément, les bornes de charge 4a-4h sont disposées entre les chargeurs 2a et 2b, et alimentés par l'un ou par l'autre par l'intermédiaire de la chaîne électrique 3, et les bornes de charge 4i-4l sont disposées entre les chargeurs 2b et 2c, et alimentés par l'un ou par l'autre par l'intermédiaire de la chaîne électrique 3'.

Il faut noter que, dans cette réalisation, le chargeur 2b est en mesure d'alimenter chacune des bornes de charge 4a-4l.

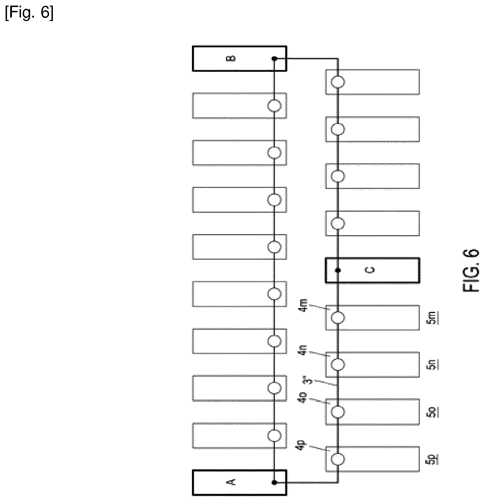

[Fig. 6] représente schématiquement un quatrième mode de réalisation de l'invention.

Ce mode de réalisation diffère du mode de réalisation présenté ci-dessus en ce que des emplacements de charge 5 sont disposés de part et d'autre du chargeur 2c. En particuliers, les emplacements de charge 5m-5p sont associés à des bornes de charge 4m-4p qui sont reliés au chargeur 2c par l'intermédiaire d'une chaîne électrique 3". Ainsi, dans cette configuration, le chargeur 2c peut alternativement transmettre une énergie électrique de charge aux bornes de charge 4i-4l par l'intermédiaire de la chaîne électrique 3', ou aux bornes de charges 4m-4p par l'intermédiaire de la chaîne électrique 3". De plus, la chaîne électrique 3" est raccordée au chargeur 2a. Ainsi, le chargeur 2a peut alternativement transmettre une énergie électrique de charge aux bornes de charge 4a-4h par l'intermédiaire de la chaîne électrique 3, ou aux bornes de charges 4m-4p par l'intermédiaire de la chaîne électrique 3". Ce mode de réalisation diffère du précédent en ce que le circuit réalisé par les chaînes électriques 3, 3', 3" est fermé. Plus précisément, comme dans le premier mode de réalisation, chaque borne de charge peut être alimentée au choix par deux chargeurs.

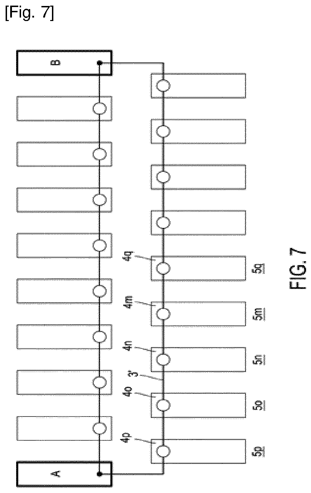

[Fig. 7] représente schématiquement un cinquième mode de réalisation de l'invention.

Ce mode de réalisation comprend deux chargeurs 2a, 2b, reliés entre eux d'une part par une chaîne électrique 3, et d'autre part par une chaîne électrique 3', desservant chacune divers emplacements de charge 5.

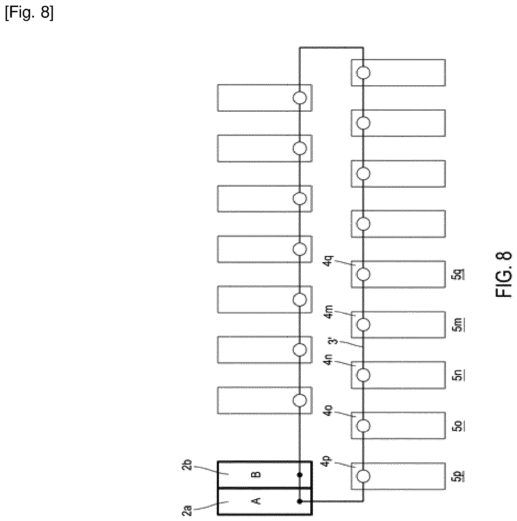

[Fig. 8] représente schématiquement un sixième mode de réalisation de l'invention.

Ce mode de réalisation est en fait similaire à celui de la figure 7, si ce n'est que les deux chargeurs 2a, 2b sont juxtaposés. En pratique, les deux chargeurs pourraient partager un même boîtier.

D'autres configurations peuvent être envisagées sur la base des configurations décrites ci-dessus. En particulier, on peut prévoir d'équiper un parc de stationnement de nombreux chargeurs reliés deux à deux par des chaînes électriques, selon une grande variété de configurations.

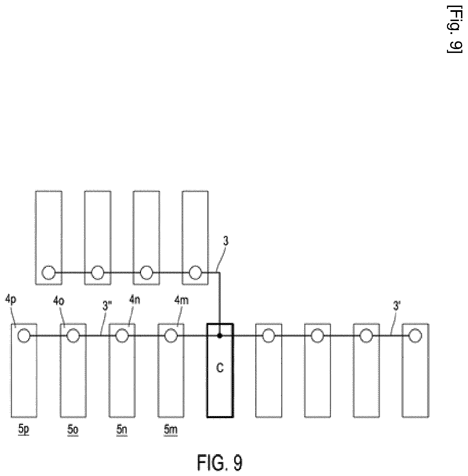

[Fig. 9] représente schématiquement un septième mode de réalisation de l'invention. Ce mode de réalisation diffère du mode de réalisation ci-dessus en ce que le chargeur 2 est raccordé à trois chaînes électriques 3, 3', 3".

En variante, un chargeur peut être raccordé à plus de trois chaînes électriques.

Selon un mode de réalisation, on pourrait prévoir qu'au moins un des chargeurs 2a, 2b, 2c soit mobile. On fait par exemple référence aux chargeurs mobiles décrits dans le brevet US 9,592,742 ou dans la demande de brevet internationale WO 2018/140,886. De tels chargeurs mobiles sont des véhicules électriques, qui portent des chargeurs électriques. De tels chargeurs mobiles peuvent être utilisés pour charger des véhicules électriques distants, stationnés en des emplacements non équipés par l'invention. Aussi, si les contraintes imposées par les véhicules électriques à charger le permettent, et si des emplacements de charge 5 sont disponibles pour qu'un chargeur mobile puisse y stationner, le système de commande peut déterminer une cartographie de raccordement qui alimente le chargeur mobile. Le chargeur mobile peut alors se connecter électriquement à la chaîne électrique par l'intermédiaire d'une borne de charge 4.

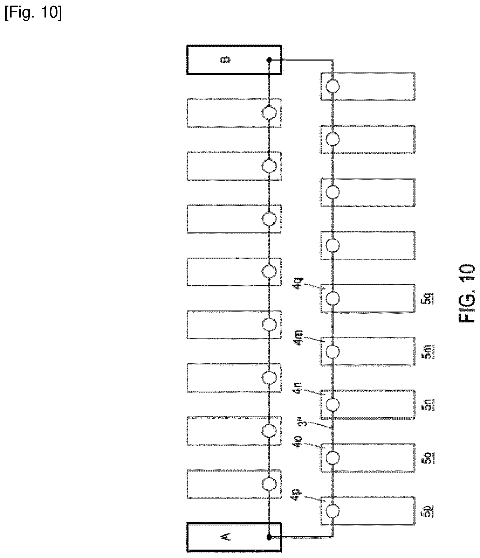

[Fig. 10] représente par exemple une première configuration, dans laquelle le système de commande 8 contrôle deux chargeurs 2a, 2b.

Si le système de commande 8 détermine qu'il ne sera pas en mesure de fournir le service demandé, il peut commander à un chargeur mobile 2c de venir en supplément se connecter au système. Dans une deuxième configuration, le système est alors conforme à la figure 6, où le chargeur mobile 2c s'est intercalé entre les chargeurs 2a et 2b.

Par exemple, l'emplacement 5q comprend un dispositif de commutation 7 tel que décrit ci-dessus. Dans la configuration de la figure 10, le dispositif de commutation 7 est soit dans sa configuration ouverte « AA », soit dans sa configuration « FF » permettant à l'énergie électrique en provenance du chargeur 2a d'alimenter des véhicules en aval de l'emplacement 5q, ou à l'énergie électrique en provenance du chargeur 2b d'alimenter des véhicules en aval de l'emplacement 5q.

Le chargeur mobile 2c peut se connecter sur l'interface 13c du dispositif de commutation 7 de la borne de charge 4q. Dans ce cas, une information à disposition du système de commande 8 est que l'emplacement 5q contient une source d'énergie.

On notera que, dans l'exemple présenté ci-dessus, c'est le système de commande 8 qui commande la connexion au système d'un chargeur mobile. Toutefois, en variante, les chargeurs mobiles peuvent être déplacés indépendamment d'une commande par le système de commande 8. Dans ce cas, simplement, le système de commande 8 reçoit l'information de la disponibilité d'un chargeur supplémentaire en un emplacement donné. Le système de commande 8 établit alors la cartographie de raccordements pour le nouveau nombre et les nouveaux emplacements de chargeurs disponibles.

Chaque chargeur peut être connecté à la chaîne électrique par un dispositif de commutation 7, à partir du moment où il n'est connecté qu'à une ou deux chaînes électriques. Les dispositifs de commutation associés aux chargeurs et aux bornes de charge présentent alors le même schéma électrique. Si le chargeur est connecté à plus de deux chaînes électriques, il faut prévoir un dispositif de commutation dédié.

On notera que, en supplément, un des véhicules électriques stationnés à charger peut être utilisé en tant que chargeur.

Chacun des chargeurs 2 est équipé de matériel d'électronique de puissance : Convertisseur de courant, composants d'alimentation électrique, compteur d'énergie, équipement de protection (interrupteur, disjoncteur, diode, fusible...), et cartes de communication avec le véhicule à charger ou avec la borne de recharge.

La description ci-dessus a été faite pour un standard de charge donné, par exemple le standard « Chademo », un raccourci pour l'expression anglaise « CHArge DE MOve ». Alternativement, cette description peut être faite pour tout autre standard de charge, par exemple « Combo CCS », ou « Type 2 - Mennekes ».

La chaîne électrique 3 comprend plusieurs lignes électriques (de différentes tensions) dont le nombre, les caractéristiques physiques, les longueurs et les sections de câble sont déterminés, selon les modes de réalisation, entre autres par le type de courant fourni (alternatif ou continu), les distances entre les objets, les standards de connexion pour la recharge des véhicules, la communication et l'informatique nécessaires pour le bon fonctionnement du système de charge 1.

Le cas échéant, on peut prévoir que chaque borne de charge est apte à charger le véhicule électrique situé en cet emplacement selon plusieurs standards de charge distincts. Dans ce cas, il suffit d'équiper les chargeurs et les chaînes électriques pour chaque standard.

De plus, il est possible de prévoir un système de charge pouvant alimenter en courant continu ou en courant alternatif. Dans ce cas, les chargeurs 2, les chaînes électriques 3 et les bornes de charge 4, y compris les câbles de connexion 11, le système de commutation 6 y compris les dispositifs de commutation 7 sont adaptés et équipés du matériel électrique associés.

Une information additionnelle disponible au système de commande 8, et utilisée pour l'établissement de la cartographie de raccordement, est le standard de charge du véhicule.

### Références

Système de charge 1
Chargeur 2
chaîne électrique 3
Borne de charge 4
Emplacement de charge 5
Système de commutation 6
Dispositif de commutation 7
Système de commande 8
Support 9
Boîtier 10
Câble 11
Interface homme-machine 12
interface de connexion 1313
commutateur 14
câblage électrique 15

## Revendications

1. Système de charge en énergie électrique de dispositifs électriques comprenant :
. au moins un premier et un deuxième chargeurs (2), chaque chargeur étant adapté pour fournir une énergie électrique instantanée de charge d'un dispositif électrique,
. une chaîne électrique (3) reliant les premier et deuxième chargeurs (2),
. au moins une première, une deuxième et une troisième bornes de charge (4), chaque borne de charge étant raccordable électriquement à chacun des premier et deuxième chargeurs (2) par l'intermédiaire de la chaîne électrique (3),
. un système de commutation (6) adapté pour alternativement raccorder ou non chaque borne de charge (4) au premier ou au deuxième chargeur (2), chaque chargeur (2) ne pouvant être raccordé, au plus, qu'à une unique borne de charge (4) de manière instantanée,
. un système de commande (8) comprenant :
.. un module informatisé de réception adapté pour recevoir des informations de charge de dispositifs électriques comprenant au moins un identifiant d'une borne de charge (4) à laquelle le dispositif électrique est branché,
.. un processeur adapté pour déterminer, de manière répétée, à partir d'au moins une règle stockée et accessible au processeur, une cartographie de raccordements entre les bornes de charge (4) et les chargeurs (2), en fonction au moins des informations de charge reçues et d'au moins une autre information choisie parmi :
- une information de temps instantanée fournie par une horloge ;
- une information de temps d'arrivée d'un dispositif électrique à une borne de charge (4) ;
- une information de temps de départ estimé d'un dispositif électrique de la borne de charge (4) ;
- une information de durée de présence estimée d'un dispositif électrique à une borne de charge (4) ;
- une information de niveau de charge initial d'un dispositif électrique ;
- une information de niveau de charge final souhaité pour un dispositif électrique ;
le système de commande étant adapté pour contrôler de manière répétée le système de commutation (6) pour raccorder électriquement, selon la cartographie de raccordement déterminée, une des bornes de charge (4) au premier chargeur (2) par l'intermédiaire de la chaîne électrique (3) et une autre des bornes de charge (4) au deuxième chargeur (2) par l'intermédiaire de la chaîne électrique (3).

2. Système de charge selon la revendication 1, dans lequel le processeur est adapté pour déterminer la cartographie de raccordements à partir en outre d'une information de niveau de charge instantané d'un dispositif électrique.

3. Système de charge selon l'une quelconque des revendications 1 à 2, dans lequel le système de commutation (6) comprend un dispositif de commutation (7) associé respectivement à chaque borne de charge (4).

4. Système de charge selon l'une quelconque des revendications 1 à 3, dans lequel le système de commutation (6) comprend une pluralité de dispositifs de commutation (7), chaque dispositif de commutation (7) pouvant alternativement :
- connecter électriquement l'emplacement (5) associé au dispositif de commutation (7) avec la chaîne électrique (3) d'un premier côté,
- connecter électriquement l'emplacement (5) associé au dispositif de commutation (7) avec la chaîne électrique (3) d'un deuxième côté,
- laisser passer l'énergie électrique sans connecter l'emplacement (5) associé au dispositif de commutation (7),
- ouvrir la chaîne électrique (3).

5. Système de charge selon l'une quelconque des revendications 1 à 4, dans lequel le système de commutation (6) comprend un dispositif de commutation (7) associé à au moins un chargeur (2).

6. Système de charge selon l'une des revendications 3 à 4 et selon la revendication 5, dans lequel le dispositif de commutation (7) associé à une borne de charge (4) et le dispositif de commutation (7) associé à un chargeur (2) présentent le même schéma électrique.

7. Système de charge selon l'une des revendications 1 à 6, dans lequel au moins un des chargeurs (2) est mobile, le système de commande (8) étant adapté pour contrôler de manière répétée le système de commutation (6) pour raccorder électriquement une des bornes de charge (4) au premier chargeur (2) par l'intermédiaire de la chaîne électrique (3) et une autre des bornes de charge (4) au deuxième chargeur (2) par l'intermédiaire de la chaîne électrique (3) en fonction de l'emplacement des chargeurs (2).

8. Système de charge selon la revendication 7, dans lequel le chargeur (2) mobile se raccorde à la chaîne électrique (3) par l'intermédiaire d'une borne de charge (4).

9. Procédé de charge en énergie électrique de dispositifs électriques dans lequel, disposant de :
- au moins un premier et un deuxième chargeurs (2), chaque chargeur (2) étant adapté pour fournir une énergie électrique instantanée de charge d'un dispositif électrique,
- une chaîne électrique (3) reliant les premier et deuxième chargeurs (2),
- au moins une première, une deuxième et une troisième bornes de charge (4), chaque borne de charge (4) étant raccordable électriquement à chacun des premier et deuxième chargeurs (2) par l'intermédiaire de la chaîne électrique (3),
- un système de commutation (6) adapté pour alternativement raccorder ou non chaque borne de charge (4) au premier ou au deuxième chargeur (2), chaque chargeur (2) ne pouvant être raccordé, au plus, qu'à une unique borne de charge (4) de manière instantanée,
. un module informatisé de réception d'un système de commande (8) reçoit des informations de charge de dispositifs électriques comprenant au moins un identifiant d'une borne de charge (4) à laquelle le dispositif électrique est branché,
. un processeur du système de commande (8) détermine, de manière répétée, à partir d'au moins une règle stockée et accessible au processeur, une cartographie de raccordements entre les bornes de charge (4) et les chargeurs (2), en fonction au moins des informations de charge reçues, et d'au moins une autre information choisie parmi :
- une information de temps instantanée fournie par une horloge ;
- une information de temps d'arrivée d'un dispositif électrique à une borne de charge (4) ;
- une information de temps de départ estimé d'un dispositif électrique de la borne de charge (4) ;
- une information de durée de présence estimée d'un dispositif électrique à une borne de charge (4) ;
- une information de niveau de charge initial d'un dispositif électrique ;
- une information de niveau de charge final souhaité pour un dispositif électrique,
. le système de commande (8) contrôle de manière répétée le système de commutation (6) pour raccorder électriquement, selon la cartographie de raccordement déterminée, une des bornes de charge (4) au premier chargeur (2) par l'intermédiaire de la chaîne électrique (3) et une autre des bornes de charge (4) au deuxième chargeur (2) par l'intermédiaire de la chaîne électrique (3).

10. Programme d'ordinateur comprenant des instructions qui, lorsque le programme est exécuté par un ordinateur, conduisent celui-ci à mettre en œuvre le procédé selon la revendication 9.

## Patentansprüche

1. System zum Aufladen elektrischer Geräte mit elektrischer Energie, bestehend aus:
. mindestens einem ersten und einem zweiten Ladegerät (2), wobei jedes Ladegerät so ausgelegt ist, dass es sofort elektrische Energie zum Laden eines elektrischen Geräts liefert,
. einer elektrischen Kette (3), die das erste und das zweite Ladegerät (2) miteinander verbindet,
. mindestens einer ersten, einer zweiten und einer dritten Ladestation (4), wobei jede Ladestation über die elektrische Kette (3) mit dem ersten und dem zweiten Ladegerät (2) elektrisch verbunden werden kann,
. einem Schaltsystem (6), das so ausgelegt ist, dass es jede Ladestation (4) abwechselnd mit dem ersten oder zweiten Ladegerät (2) verbinden kann oder nicht, wobei jedes Ladegerät (2) mit maximal einer Ladestation (4) sofort verbunden werden kann,
. einem Steuersystem (8) bestehend aus:
. einem computergestützten Empfangsmodul, das geeignet ist, Ladeinformationen von elektrischen Geräten zu empfangen, die mindestens einen Benutzernamen einer Ladestation (4) umfassen, an die das elektrische Gerät angeschlossen ist,
. einem Prozessor, der so beschaffen ist, dass er wiederholt anhand mindestens einer gespeicherten Regel, auf die der Prozessor zugreifen kann, einen Verbindungsplan der Anschlüsse zwischen den Ladestationen (4) und den Ladegeräten (2) bestimmen kann in Abhängigkeit von den empfangenen Ladeinformationen und mindestens einer anderen Information, wobei es sich bei dieser um folgende Informationen handeln kann:
- eine sofortige Zeitinformation, die von einer Uhr bereitgestellt wird;
- eine Information über die Ankunftszeit eines elektrischen Geräts an einer Ladestation (4);
- eine Information über die voraussichtliche Abfahrtszeit eines elektrischen Geräts von der Ladestation (4);
- eine Information über die geschätzte Zeit der Anwesenheit eines elektrischen Geräts an einer Ladestation (4);
- eine Information über den Ausgangsladezustand eines elektrischen Geräts;
- eine Information über den gewünschten endgültigen Ladezustand eines elektrischen Geräts;
wobei das Steuersystem so ausgelegt ist, dass es das Schaltsystem (6) wiederholt so steuert, dass es gemäß dem bestimmten Verbindungsplan der Anschlüsse, eine der Ladestationen (4) über die elektrische Kette (3) mit dem ersten Ladegerät (2) und eine der anderen Ladestationen (4) über die elektrische Kette (3) mit dem zweiten Ladegerät (2) elektrisch verbindet.

2. Ladesystem gemäß Anspruch 1, in dem der Prozessor so ausgelegt ist, dass er den Verbindungsplan der Anschlüsse auf der Grundlage einer Information des Ladezustandes eines elektrischen Geräts bestimmen kann.

3. Ladesystem gemäß einem der Ansprüche 1 bis 2, wobei das Schaltsystem (6) eine Schaltvorrichtung (7) umfasst, die jeweils einer Ladestation (4) zugeordnet ist.

4. Ladesystem gemäß irgendeinem der Ansprüche 1 bis 3, wobei das Schaltsystem (6) eine Mehrzahl an Schaltvorrichtungen (7) umfasst, wobei jede Schaltvorrichtung (7) abwechselnd jeweils:
- den der Schaltvorrichtung (7) zugeordneten Steckplatz (5) auf einer ersten Seite mit der elektrischen Kette (3) elektrisch verbinden kann,
- den der Schaltvorrichtung (7) zugeordneten Steckplatz (5) auf einer zweiten Seite mit der elektrischen Kette (3) elektrisch verbinden kann,
- die elektrische Energie passieren lassen, ohne den mit der Schaltvorrichtung (7) verbundenen Steckplatz (5) anzuschließen,
- die elektrische Kette (3) öffnen kann.

5. Ladesystem gemäß irgendeinem der Ansprüche 1 bis 4, wobei das Schaltsystem (6) eine Schaltvorrichtung (7) umfasst, die jeweils einer Ladestation (2) zugeordnet ist.

6. Ladesystem gemäß einem der Ansprüche 3 bis 4 und nach Anspruch 5, wobei die einer Ladestation (4) zugeordnete Schaltvorrichtung (7) und die einem Ladegerät (2) zugeordnete Schaltvorrichtung (7) den gleichen Stromlaufplan aufweisen.

7. Ladesystem gemäß einem der Ansprüche 1 bis 6, bei dem mindestens eines der Ladegeräte (2) mobil ist, wobei das Steuersystem (8) geeignet ist, das Schaltsystem (6) wiederholt zu steuern, um eine der Ladestationen (4) über die elektrische Kette (3) mit dem ersten Ladegerät (2) und eine der anderen Ladestationen (4) über die elektrische Kette (3) mit dem zweiten Ladegerät (2) elektrisch zu verbinden, in Abhängigkeit vom Austausch der Ladegeräte (2).

8. Ladesystem gemäß dem Anspruch 7, bei dem das mobile Ladegerät (2) mit der elektrischen Kette (3) über eine Ladestation (4) verbunden wird.

9. Verfahren zum Aufladen elektrischer Geräte mit elektrischer Energie, bestehend aus:
- mindestens einem ersten und einem zweiten Ladegerät (2), wobei jedes Ladegerät so ausgelegt ist, dass es sofort elektrische Energie zum Laden eines elektrischen Geräts liefert,
- einer elektrischen Kette (3), die das erste und das zweite Ladegerät (2) miteinander verbindet,
- mindestens einer ersten, einer zweiten und einer dritten Ladestation (4), wobei jede Ladestation über die elektrische Kette (3) mit dem ersten und dem zweiten Ladegerät (2) elektrisch verbunden werden kann,
- einem Schaltsystem (6), das dazu ausgelegt ist, jede Ladestation (4) abwechselnd mit dem ersten oder zweiten Ladegerät (2) zu verbinden oder nicht, wobei jedes Ladegerät (2) sofort mit höchstens einer Ladestation (4) verbunden werden kann,
einem computergestützten Empfangsmodul eines Steuersystems (8), das geeignet ist, Ladeinformationen von elektrischen Geräten zu empfangen, die mindestens einen Benutzernamen einer Ladestation (4) umfassen, an die das elektrische Gerät angeschlossen ist, einem Prozessor des Steuersystems (8), der so beschaffen ist, dass er anhand mindestens einer gespeicherten Regel, auf die der Prozessor zugreifen kann, wiederholt einen Verbindungsplan der Anschlüsse zwischen den Ladestationen (4) und den Ladegeräten (2) in Abhängigkeit von den empfangenen Ladeinformationen und mindestens einer anderen Information bestimmt, wobei letztere:
- eine sofortige Zeitinformation, die von einer Uhr bereitgestellt wird;
- eine Information über die Ankunftszeit eines elektrischen Geräts an einer Ladestation (4);
- eine Information über die voraussichtliche Abfahrtszeit eines elektrischen Geräts von der Ladestation (4);
- eine Information über die geschätzte Zeit der Anwesenheit eines elektrischen Geräts an einer Ladestation (4);
- eine Information über den Ausgangsladezustand eines elektrischen Geräts;
- eine Information über den gewünschten endgültigen Ladezustand eines elektrischen Geräts;
.wobei das Steuersystem (8) so ausgelegt ist, dass es das Schaltsystem (6) wiederholt so steuert, dass es gemäß dem bestimmten Verbindungsplan der Anschlüsse, eine der Ladestationen (4) über die elektrische Kette (3) mit dem ersten Ladegerät (2) und eine der anderen Ladestationen (4) über die elektrische Kette (3) mit dem zweiten Ladegerät (2) elektrisch verbindet.

10. Computerprogramm bestehend aus Anweisungen, die, wenn das Programm von einem Computer ausgeführt wird, den Computer veranlassen, das Verfahren gemäß Anspruch 9 auszuführen.

## Claims

1. Electrical energy charging system for electrical devices comprising:
. at least a first and a second charger (2), each charger being adapted to provide instantaneous electrical energy for charging an electrical device,
. an electric chain (3) connecting the first and second chargers (2),
. at least a first, a second and a third charging terminals (4), each charging station being electrically connectable to each of the first and second chargers (2) via the electric chain (3),
. a switching system (6) adapted to alternately connect or not each charging terminal (4) to the first or to the second charger (2), each charger (2) being able to be instantaneously connected, at most, to only one single charging terminal (4),
. a control system (8) comprising:
.. a computerized receiving module suitable for receiving charging information from electrical devices comprising at least one identifier of a charging terminal (4) to which the electrical device is connected,
.. a processor suitable for determining, repeatedly, from at least one rule stored and accessible to the processor, a mapping of connections between the charging terminals (4) and the chargers (2), as a function of at least the received charging information and at least one other information chosen from:
instantaneous time information provided by a clock;
- information on the arrival time of an electrical device at a charging terminal (4);
- information on the estimated departure time of an electrical device from the charging terminal (4);
- information on the estimated duration of presence of an electrical device at a charging terminal (4);
- information on the initial charge level of an electrical device;
- information on the desired final charge level for an electrical device;
the control system being adapted to repeatedly control the switching system (6) to electrically connect, according to the determined mapping of connections, one of the charging terminals (4) to the first charger (2) via the electric chain (3) and another of the charging terminals (4) to the second charger (2) via the electric chain (3).

2. The charging system of claim 1, wherein the processor is adapted to determine the mapping of connections from further information on the instantaneous charge level of an electrical device.

3. Charging system according to any one of claims 1 to 2, wherein the switching system (6) comprises a switching device (7) associated respectively with each charging terminal (4).

4. Charging system according to any one of claims 1 to 3, wherein the switching system (6) comprises a plurality of switching devices (7), each switching device (7) may alternatively:
- electrically connect the location (5) associated with the switching device (7) with the electric chain (3) on the first side,
- electrically connect the location (5) associated with the switching device (7) with the electric chain (3) on a second side,
- let the electrical energy pass without connecting the location (5) associated with the switching device (7),
- open the electrical chain (3).

5. Charging system according to any one of claims 1 to 4, wherein the switching system (6) comprises a switching device (7) associated with at least one charger (2).

6. Charging system according to one of claims 3 to 4 and according to claim 5, wherein the switching device (7) associated with a charging terminal (4) and the switching device (7) associated with a charger (2) have the same electrical diagram.

7. Charging system according to one of claims 1 to 6, wherein at least one of the chargers (2) is movable, the control system (8) being adapted to repeatedly control the switching system (6) for electrically connecting one of the charging terminals (4) to the first charger (2) via the electric chain (3) and another of the charging terminals (4) to the second charger (2) via the electric chain (3) taking into account the location of the chargers (2).

8. Charging system according to claim 7, wherein the mobile charger (2) is connected to the electric chain (3) via a charging station (4).

9. A method of charging electrical devices with electrical energy in which, having:
- at least a first and a second charger (2), each charger (2) being adapted to provide instantaneous electrical energy for charging an electrical device,
- an electric chain (3) connecting the first and second chargers (2),
- at least a first, a second and a third charging terminals (4), each charging terminal (4) being electrically connectable to each of the first and second chargers (2) via the electric chain (3),
- a switching system (6) adapted to alternately connect or not each charging terminal (4) to the first or second charger (2), each charger (2) being able to be instantaneously connected, at most, to only one single charge terminal (4),
. a computerized receiving module of a control system (8) receives charging information from electrical devices comprising at least one identifier of a charging station (4) to which the electrical device is connected,
. a processor of the control system (8) repeatedly determines, from at least one rule stored and accessible to the processor, a mapping of connections between the charging terminals (4) and the chargers (2), as a function of at least the received charging information, and at least one other information chosen from:
instantaneous time information provided by a clock;
- information on the arrival time of an electrical device at a charging terminal (4);
- information on the estimated departure time of an electrical device from the charging terminal (4);
- information on the estimated duration of presence of an electrical device at a charging terminal (4);
- information on the initial charge level of an electrical device;
- information on the desired final charge level for an electrical device,
. the control system (8) repeatedly controls the switching system (6) to electrically connect, according to the determined mapping of connections, one of the charging terminals (4) to the first charger (2) via the electric chain (3) and another of the charging terminals (4) to the second charger (2) via the electric chain (3).

10. A computer program comprising instructions which, when the program is executed by a computer, lead the latter to implement the method according to claim 9.
